(19) Europäisches Patentamt / European Patent Office / Office européen des brevets

(11) **EP 3 210 314 B1**

(12) **EUROPEAN PATENT SPECIFICATION**

(45) Date of publication and mention
of the grant of the patent:
**12.02.2020 Bulletin 2020/07**

(21) Application number: **14799903.1**

(22) Date of filing: **24.10.2014**

(51) Int Cl.:
**H04B 7/0456** (2017.01)   **H04B 7/06** (2006.01)

(86) International application number:
**PCT/SE2014/051258**

(87) International publication number:
**WO 2016/064318 (28.04.2016 Gazette 2016/17)**

(54) **CSI-ACCURACY AWARE NETWORK PROCESSING**

CSI-GENAUIGKEITSBEWUSSTE NETZWERKVERARBEITUNG

TRAITEMENT DE RÉSEAU EN FONCTION DE PRÉCISION CSI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.08.2017 Bulletin 2017/35**

(73) Proprietor: **Telefonaktiebolaget LM Ericsson
(publ)
164 83 Stockholm (SE)**

(72) Inventors:
• **RYDÉN, Henrik
582 15 Linköping (SE)**

• **MOOSAVI, Reza
583 33 Linköping (SE)**
• **HESSLER, Martin
587 58 Linköping (SE)**
• **ERIKSSON, Erik
585 93 Linköping (SE)**

(74) Representative: **Brann AB
P.O. Box 3690
Drottninggatan 27
103 59 Stockholm (SE)**

(56) References cited:
**EP-A1- 1 499 056     WO-A1-2007/032715
WO-A1-2014/040655**

**Description**

TECHNICAL FIELD

The present disclosure relates to wireless communication networks, and in particular to network nodes and wireless devices for channel state information (CSI) accuracy aware network processing.

BACKGROUND

Mobile data traffic in wireless networks is growing due to, e.g., the use of smart phones, tablets, and other data traffic heavy appliances. As a result, operators are continuously striving to increase network capacity and data throughput to meet the growing needs for network throughput.

One way of increasing capacity, or throughput, in wireless networks is to increase the available frequency bandwidth of the system. However, available frequency spectrum is becoming scarce, and alternative solutions to meet high demands on data rate and throughput are needed.

Another way of handling increased data traffic, not hinging on increased frequency bandwidth, is to deploy more base stations (BS), i.e., to densify the networks. This would, however, increase interference in the wireless network and also have an impact on network deployment cost and operational expenditure for network operators.

Yet another option for increasing data rate in wireless networks is to introduce large antenna arrays at the BSs. A BS, having a large number of antennas, can then simultaneously schedule multiple wireless devices at the same time/frequency resource. This use of large antenna arrays is often referred to as very large (VL) multi-user (MU) multiple-input-multiple-output (MIMO), or massive MIMO.

EP 1499056 A1 describes a method for transmitting signals from a transmitter comprising two or more antennas in a mobile telecommunications network by determining channel state information and an estimation of the reliability of the channel state information. Further, WO 2014/040655 A1 describes an apparatus for estimating channel state information based on channel state information reference signals. Furthermore, WO 2007/032715 A1 describes a method and an arrangement for providing a reliability measure for a communication channel from a transmitter unit to a receiver unit representing an estimation of appropriate channel parameters for improving the reliability of information regarding the communication channel between the transmitter and receiver units.

However, the need for increased throughput in wireless networks persists, and further improvements in network capacity are needed.

SUMMARY

The invention is defined by independent claims 1 (method), 8 (computer program) and 9 (device - network node). Advantageous embodiments are described in the dependent claims. Embodiments and/or examples mentioned in the description that do not fall under the scope of the claims are useful for understanding the invention.

An object of the present disclosure is to provide at least network nodes, a wireless devices, and methods which seek to mitigate, alleviate, or eliminate one or more of the above-identified deficiencies in the art and disadvantages singly or in any combination.

This object is obtained by a method, performed in a network node, of generating at least one beam-forming vector for radio transmission to, or radio reception from, at least one target wireless device. The method comprises obtaining, for one or more wireless devices, respective channel state information, CSI, and CSI accuracy value. The method also comprises generating the at least one beam-forming vector based on the CSI and corresponding CSI accuracy value. In the generating of the beam-forming vector, a CSI associated with a high CSI accuracy value is given equal or higher preference in the generating compared to a CSI associated with a CSI accuracy value lower than the high CSI accuracy value. Further, obtaining the CSI accuracy value comprises: receiving a time-stamp of the CSI from the one or more wireless devices, and determining the corresponding CSI accuracy value based on a lapsed time duration between the time-stamp of the CSI received from the one or more wireless devices at the network node and a time instant of generating the at least one beam-forming vector. The one or more wireless devices having a CSI accuracy value above a threshold is considered to have an accurate CSI for use in beam-forming. Further, generating the at least one beam-forming vector comprises: obtaining a respective channel coefficient vector $\mathbf{h}_i$, indexed by i = 1,...,N, for each wireless device of the one or more wireless devices associated with CSI accuracy values $t_i$, and different from a first target wireless device associated with a channel coefficient vector $\mathbf{h'}$; and generating a beam-forming vector w for radio transmission to, or radio reception from, the first target wireless device as a solution to a constrained optimization problem given by:

maximize $|\mathbf{w}^*\mathbf{h'}|$ over $\mathbf{w}$

such that

$$|w^*h'| < t_i, \quad i=1,\dots, N;$$

and

$$\|w\|=1$$

where a* denotes complex conjugate of vector a, | | denotes an absolute value, and ‖ ‖ denotes an Euclidean vector norm. Further, for a subset of the one or more wireless devices having accurate CSI, the generating the at least one beam-forming vector further comprises: obtaining a respective channel coefficient vector $\mathbf{h}_i$ for each of the one or more wireless devices being associated with a CSI accuracy value equal to or above the threshold and different from a first target wireless device; and generating a beam-forming vector for radio transmission to, or radio reception from, the first target wireless device as a vector in a null-space of a transposed matrix $\tilde{H}$ having columns given by said channel coefficient vectors $\mathbf{h}_i$, wherein the generating further comprises generating the beam-forming vector as $w = \dfrac{\langle Z^+\rangle_1}{\|\langle Z^+\rangle_1\|}$, $\langle Z^+\rangle_1$ denoting a first column of pseudo-inverse to matrix $Z = [\mathbf{h}', \tilde{H}^T]^T$, and $\mathbf{h}'$ denoting a channel coefficient vector of the first target wireless device.

Hereby, performance in terms of at least sum-throughput or capacity is improved in the wireless network where the network node is deployed, i.e., network capacity or throughput in the network is increased, without need for deployment of additional base stations (BSs) or allocation of additional frequency spectrum. Furthermore, at least some of the detrimental effects from interference in the wireless network are reduced.

According to some aspects, the generating comprises protecting wireless devices associated with a first range of CSI accuracy values from a radio transmission interference prior to protecting wireless devices associated with a range of CSI accuracy values lower than the first range from the radio transmission interference.

Hereby, wireless devices associated with sufficiently high CSI accuracy is given improved protection from interference, while other wireless devices associated with less accurate CSI are not protected from interference to the same extent. Thus, performance in terms of at least sum-throughput or capacity of the wireless network of the network node is improved.

According to some other aspects, the generating comprises improving a received signal quality of a receiving target wireless device when the receiving target wireless device is associated with a high CSI accuracy value, and reducing a radio transmission interference to other wireless devices when the receiving target wireless device is associated with a CSI accuracy value lower than the high CSI accuracy value.

Hereby, wireless devices obtain improved received signal quality when such improvement is feasible due to available accurate CSI. On the other hand, when CSI accuracy is not high enough to provide a sufficiently improved received signal quality, other wireless devices in the network are instead protected from interference. Thus, performance in terms of at least sum-throughput or capacity of the wireless network of the network node is improved.

According to some general aspects, the method further comprises defining a common demodulation reference signal, DMRS, resource for radio transmission to two or more target wireless devices, and transmitting respective wireless device specific data using DMRS on the common DMRS resource to a wireless devices associated with a CSI accuracy value satisfying one or more accuracy criteria.

Hereby, communication resources in the wireless network are conserved, thus freeing up valuable time/frequency resources for data transmission in the wireless communication system. Consequently, performance in terms of at least sum-throughput or capacity of the wireless network of the network node is improved.

The above-mentioned object is also obtained by a method performed in a wireless device for receiving or transmitting a radio transmission, the radio transmission being beam-formed by a beam-forming vector generated by a network node. The method comprises determining a CSI accuracy value, and transmitting the determined CSI accuracy value to the network node, as well as receiving or transmitting the radio transmission with the beam-forming vector generated based on the transmitted CSI accuracy value. The CSI accuracy value is determined based on a lapsed time duration between a time stamp of a CSI received at the network node for the wireless device and a time instant of generating the beam-forming vector by the network node.

Hereby, the network node is made aware of the CSI accuracy value of the wireless device via feedback from the wireless device, whereupon the network node is assumed operable to generate a beam-forming vector based on the CSI accuracy value of the wireless device. Thus, performance in terms of at least sum-throughput or capacity of the wireless network of the network node is improved.

There are also disclosed herein network nodes and wireless devices configured to perform or to implement the respective disclosed methods, as well as computer programs and computer program products comprising computer program code which, when executed in a network node or wireless device, causes the network node or wireless device, respectively, to execute methods according to the present teaching.

The computer programs, the computer program products, the network nodes and the wireless devices display advantages corresponding to the advantages already described in relation to the methods.

BRIEF DESCRIPTION OF THE DRAWINGS

Further objects, features, and advantages of the present disclosure will appear from the following detailed description, wherein some aspects of the disclosure will be described in more detail with reference to the accompanying drawings, in which:

Figure 1 is a schematic overview of a wireless communication system according to aspects of the present teaching.

Figure 2 is a graph showing average received signal to noise ratio (SNR) on the y-axis versus channel correlation on the x-axis.

Figure 3 is a flowchart illustrating aspects of methods performed in a network node.

Figure 4 is a flowchart illustrating further aspects of methods performed in a network node.

Figure 5 is a flowchart illustrating aspects of methods performed in a wireless communication system comprising a network node.

Figure 6 is a flowchart illustrating aspects of methods performed in a wireless device.

Figure 7 is a graph showing sum-throughput on the y-axis versus channel correlation on the x-axis.

Figure 8 is a graph showing sum-throughput on the y-axis versus channel correlation on the x-axis.

Figure 9 is a block diagram schematically illustrating aspects of a network node.

Figure 10 is a block diagram schematically illustrating aspects of a wireless device.

Figure 11 is a block diagram schematically illustrating aspects of a network node.

Figure 12 is a block diagram schematically illustrating aspects of a wireless device.

DETAILED DESCRIPTION

The present teaching relates to a technique for generating at least one beam-forming vector for radio transmission to at least one target wireless device, or for reception of a radio transmission from at least one target wireless device, taking the accuracy of available channel state information (CSI) of wireless devices into account in the generating of the at least one beam-forming vector. A number of advantages are obtained by taking CSI accuracy into account, as will be made clear from the below description.

Beam-forming vectors for radio transmission to or from one or more target wireless devices are often generated based on CSI of the wireless devices, such as channel coefficient vectors h describing complex channel gains between transmitter antenna elements and at least one receiver antenna element. However, CSI available for use in beam-forming can be of varying accuracy, i.e., certain elements of CSI can be outdated or associated with large measurement error, while other elements is highly accurate.

As will be shown below, network performance in terms of, e.g., total throughput or capacity, can be improved by accounting for the fact that CSI associated with different wireless devices is of varying accuracy, and allowing CSI with high accuracy to have a larger impact on the beam-forming than CSI which is associated with a lower degree of accuracy.

Aspects of the present disclosure will now be described more fully with reference to the accompanying drawings.

The apparatus, computer program, computer program products, and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

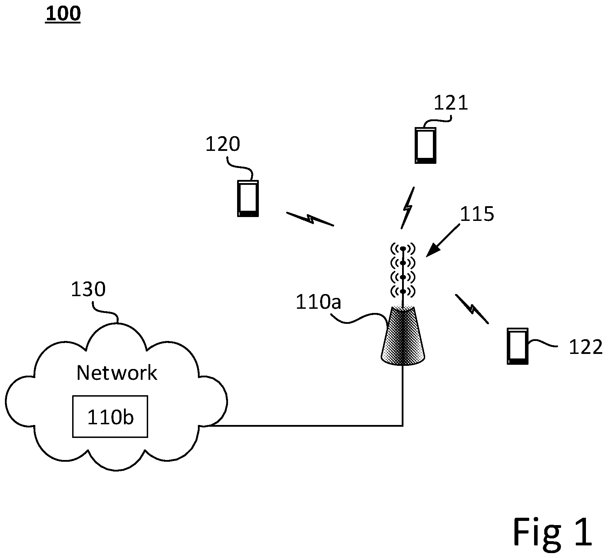

Figure 1 is a schematic overview of a wireless communication system 100 according to aspects of the present teaching. There are two network nodes 110a, 110b shown in Figure 1. One of the network nodes 110a, call it a first network node 110a, is configured to transmit and receive radio signal to and from one or more wireless devices 120, 121, 122. Towards this end, the first network node 110a is configured with an antenna arrangement 115 comprising a number N of antenna elements, which N antenna elements enable transmission and reception of beam-formed radio signals to and/or from one or more wireless devices 120, 121, 122 in the wireless communication system 100.

Consequently, the antenna arrangement 115 is, according to some aspects, arranged to receive radio transmission from the one or more wireless devices 120, 121, 122, and, according to other aspects, arranged to generate radio transmissions to the one or more wireless devices.

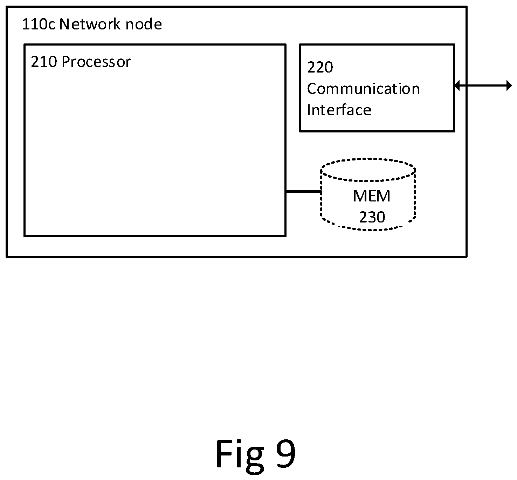

Example implementations of the network nodes 110a, 110b, and of the wireless devices 120, 121, 122 will be further discussed in connection to Figures 9-12 below.

Examples of a network node 110a include a radio base station (RBS), a node B (NB), an evolved node B (eNB), a wireless local area network (WLAN) access point, or any other means for wirelessly accessing a communications network 130. The network node 110b is a node arranged to provide computing power and computing resources to facilitate communications via the first network node 110a.

Examples of a wireless device 120, 121, 122 include user equipment (UE), a mobile phone, a smart phone, a PDA (Personal Digital Assistant), a portable computer (e.g., laptop, tablet), a sensor, a modem, a machine type (MTC) device / machine to machine (M2M) device, laptop embedded equipment (LEE), laptop mounted equipment (LME), USB dongles, a device-to-device capable device, or another device that can provide wireless communication, such as a car, refrigerator, shoe or shirt.

The terms wireless device and network node are thus herein given a wide interpretation.

Herein, radio transmission and reception via the antenna arrangement 115 of the first network node 110a is said to be beam-formed by one or more beam-forming vectors. A wireless device associated with a given beam-forming vector is herein referred to as a target wireless device. According to aspects, a beam-forming vector describes a phase and an amplitude for each of the antenna elements comprised in the antenna arrangement 115, to be applied to a transmitted or received signal, in order to generate a number of antenna beams, or lobes, in given directions and of given widths. Direction here comprises both azimuth and altitude of the beam.

The beam-forming vector, i.e., the vector of complex weights, is according to some aspects generated at the first network node 110a prior to being used in beam-forming during transmission or reception of radio signals. However, the beam-forming vector is, according to some other aspects, generated in the second network node 110b, and communicated to the first network node 110a where it is used in the actual radio transmission or reception.

Such aspects arise, for instance, in wireless networks that implement central computation nodes, and where the complexity at the actual transmitting and receiving sites is limited.

As noted above, beam-forming vectors for radio transmission or reception to or from one or more target wireless devices are often generated based on channel state information (CSI) associated with the wireless devices, such as channel coefficient vectors describing complex channel gains between antenna elements at the first network node 110a and the at least one antenna element of a wireless device 120, 121, 122. The beam-forming vector will be an N by 1 vector of complex weights, or, alternatively, of amplitude and phase adjustment values, in case the antenna arrangement 115 has N antenna elements and the wireless devices have 1 antenna each. In case a wireless device is also equipped with an antenna array, say an array of M elements, then the beam-forming vector will still be of size N by 1, but the channel between the first network node 110a and the wireless device will be modelled by a channel matrix of size N by M.

A problem which is often overlooked in the design of pre-coders, i.e., generating beam-forming vectors for use in pre-coding units or modules configured to perform beam-forming, is that the accuracy of the CSI might change with time and/or frequency, and hence this has to be taken into account when designing the pre-coder. This can be mitigated to some extent by using existing pre-coder solutions in an adaptive manner. That is, by adaptively choosing the pre-coder based on how accurate the given CSI is, one can combat the problem of varying CSI accuracy. However, in scenarios with multi-user scheduling in the same time-frequency resource the accuracy of CSI might be different for different wireless devices. This is, according to some aspects, due to the fact that the users have different channel characteristics, for instance due to different speed or different periodicity for CSI reporting. In other words, the quality or the accuracy of the CSI is in many scenarios user dependent, i.e., varying between wireless devices.

To get a quantitative understanding of how inaccurate CSI affects the sum-throughput performance of a wireless network, computer simulation experiments were performed. Consider a multiple-input-single-output (MISO) system with *N* = 100 input antennas and assume maximum ratio transmission (MRT). Mathematically, this can be expressed as

$$y = \sqrt{P}\boldsymbol{h}\boldsymbol{w}q + e,$$

where y represents a received signal sample, *P* is the transmitted power, $\boldsymbol{h}$ denotes an $N \times 1$ channel vector of complex channel gains, $\boldsymbol{w}$ is the $1 \times N$ pre-coding or beam-forming vector, *q* is a unit-energy transmitted symbol and e is zero-mean additive white Gaussian noise with variance $\sigma^2$. Ideally, the MRT pre-coder is $\boldsymbol{w} = \dfrac{\boldsymbol{h}^*}{\|\boldsymbol{h}\|},$ which results in an average received signal-to-noise-ratio (SNR) that scales with *N*.

Throughout this document, the conjugate transpose, also known as Hermitian transpose, of a vector or a matrix is denoted by superscript *. Mathematically, for the $m \times n$ matrix A, A* is an $n \times m$ matrix with $A^*_{i,j} = \bar{A}_{i,j}.$ Moreover, $A^T$ denotes the transpose of matrix A, and $A^+$ denotes the pseudo-inverse to the matrix A defined as $A^+ = A^*(AA^*)^{-1}$.

In practice, as discussed above, the channel from transmitter to receiver may change from the measurement of $\boldsymbol{h}$ to the actual transmission. We model this statistically by assuming that the channel correlation between the measurement time instant and the transmission time instant is given by $1 - \rho$, where, $\rho = 0$ means that the channel remains the same and $\rho = 1$ means that the channels are uncorrelated between measurement of $\boldsymbol{h}$ and the actual transmission via the channel.

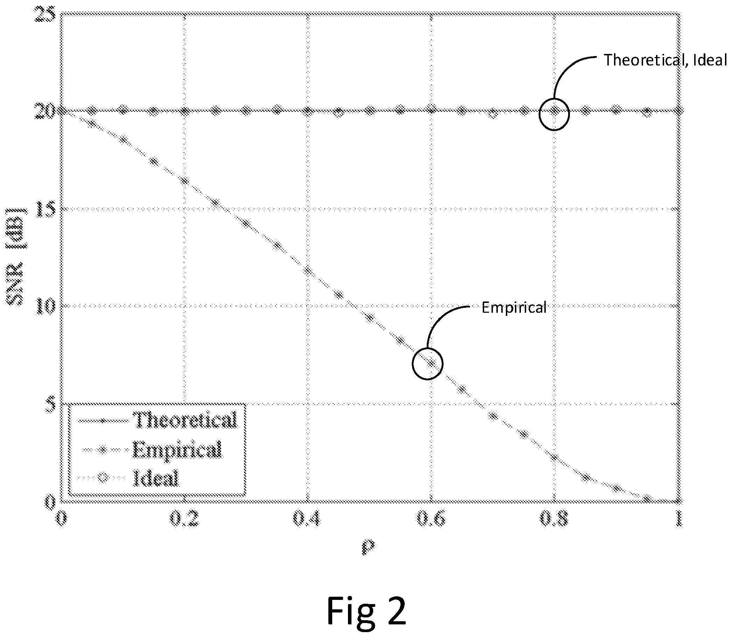

The results of this experiment are plotted in Figure 2, which shows average received signal to noise ratio (SNR) in units of dB on the y-axis and the channel correlation $\rho$ discussed above on the x-axis for three cases; Theoretical, Empirical and Ideal. In this figure, the transmitted SNR is set to 1, i.e., $\dfrac{P}{\sigma^2} = 1$ and a fast Rayleigh fading scenario is assumed where the elements of $\boldsymbol{h}$ are circularly symmetric Gaussian random variables with mean zero and variance 1. As can be seen, for $\rho = 0.15$, the received SNR (Empirical) decreases by half compared to the Ideal case, which illustrates how sensitive the MRT is with respect to the accuracy of the CSI. Similar conclusions are observed for a zero-forcing criterion based pre-coder.

Consequently, the efficiency of using MRT transmission to a target wireless device decreases rapidly with $\rho$. Thus, as will be discussed in more detail below, MRT transmission loses its appeal as a CSI accuracy value of the target wireless device decreases.

From this experiment it is furthermore concluded that, in scenarios with spatial multiplexing by means of large antenna arrays of many wireless devices in the same time/frequency resource, one should consider the age or the accuracy of the CSI for each wireless device when designing the pre-coder or beam-forming vectors for use during radio transmission and reception.

Consequently, we propose techniques herein that take CSI accuracy of one or more wireless devices into account when generating one or more beam-forming vectors. One idea disclosed herein is to find a pre-coder or beam-forming vector for each user such that the interference caused by the transmission to other users is proportional to the accuracy of the CSI of the corresponding users. For example, the beam-forming vector can be designed such that it only causes a minimum of interference to the users for whom we have accurate CSI, i.e., we do not protect the users for whom we have inaccurate CSI, since the exact direction of the channels for those users are not known accurately enough.

We further propose herein schemes that increase system throughput, and especially the sum-throughput of a wireless network. Some of the proposed schemes impose little or no additional computational complexity as compared to using zero-forcing (ZF) pre-coding. Some of the proposed schemes can be adjusted so that only maximum ratio transmission (MRT) or ZF is used and hence has MRT and ZF as special use cases. It is appreciated that one foreseen application of our proposed technique is very large (VL) multi-user (MU) multiple-input-multiple-output (MIMO) or massive MIMO systems, but the technique is by no means limited to this example system.

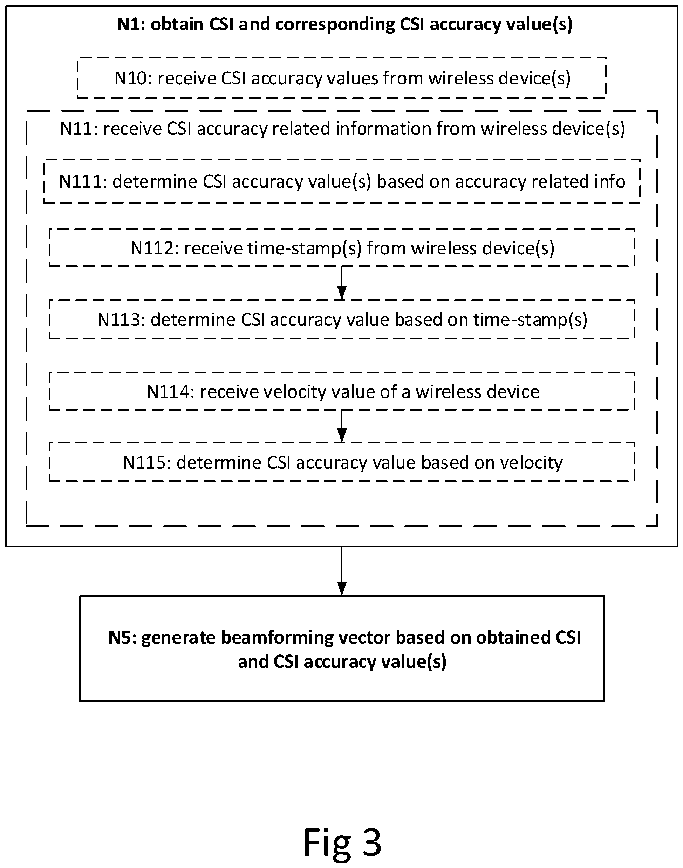

Figure 3 is a flowchart illustrating aspects of methods performed in a network node wherein at least some of the principles discussed above are embodied. In particular, Figure 3 illustrates a method, performed in a network node 110a, 110b, of generating at least one beam-forming vector for radio transmission to, or radio reception from, at least one target wireless device 120. The method comprises obtaining N1, for one or more wireless devices 120, 121, 122, respective channel state information, CSI, and CSI accuracy value.

The CSI, according to different aspects, comprises information pertinent to generating a beam-forming vector, i.e., to design a pre-coder for radio transmission to or radio reception from the at least one target wireless device. An example of CSI is the channel coefficient vectors discussed above. The CSI accuracy value is a value that quantifies how accurate the corresponding CSI is, and will be further discussed below. A CSI can be in-accurate for many reasons, some of which include noisy channel estimates and outdated or obsolete channel estimates.

In addition to the obtaining N1, the method also comprises generating N5 the at least one beam-forming vector based on the CSI and corresponding CSI accuracy value. Here, a CSI associated with a high CSI accuracy value is given equal or higher preference in the generating compared to a CSI associated with a CSI accuracy value lower than the high CSI accuracy value.

In other words, consider a scenario with multi-user scheduling where many users or wireless devices are scheduled simultaneously in the same time/frequency resources, and where the accuracy of respective CSI is different for different wireless devices. In this case, since the channels for some of the wireless devices are not known accurately anyway, there is no pressing need to design a pre-coder that causes no interference to those users, as interference would still result due to the in-accuracy of the CSI.

Thus, different beam-forming vectors are generated depending on the state or level of accuracy in the obtained CSI accuracy values. A rationale behind the present teaching is that beam-forming should not be overly impacted by in-accurate CSI, since this beam-forming is likely to not serve the intended purpose of suppressing interference or improving received signal quality. This rationale will be further clarified below by some of the different aspects of the disclosed method.

According to some such aspects, the generating N5 comprises protecting wireless devices associated with a first range of CSI accuracy values from a radio transmission interference prior to protecting wireless devices associated with a range of CSI accuracy values lower than the first range from the radio transmission interference.

Thus, depending on the CSI accuracy value, a wireless device will intentionally be given different levels of interference protection. As an example, suppose the network node 110a, 110b is not in possession of any accurate CSI for a given wireless device, i.e., the respective CSI accuracy value of a given wireless device indicates an in-accurate CSI, then the network node is most likely not able to efficiently generate a beam-forming vector which suppresses interference to the wireless device, even if this would have been preferred, due to the lack of accurate CSI. Instead, the beam-forming vector is generated with a focus on suppressing interference to the wireless devices where this interference suppression is feasible, i.e., practically achievable.

According to other such aspects, the generating N5 comprises improving a received signal quality of a receiving target wireless device when the receiving target wireless device is associated with a high CSI accuracy value, and reducing a radio transmission interference to other wireless devices when the receiving target wireless device is associated with a CSI accuracy value lower than the high CSI accuracy value.

Again, depending on the CSI accuracy value, a wireless device will either be given an improved received signal quality or intentionally not given an improved received signal quality. The rationale behind this idea is similar to the one discussed above, i.e., if a wireless device is associated with a low CSI accuracy value, then the network node is most likely not able to improve received signal quality very much anyway from beam-forming due to the in-accurate CSI, instead the network node might as well generate a beam-forming vector targeted at reducing interference at other wireless devices.

The CSI can be obtained in a number of different ways, and the information on the accuracy of the CSI for each wireless device can also be obtained in various ways, some of which are described below. It is appreciated, however, that the techniques disclosed herein are not limited to the particular disclosed examples of obtaining CSI and CSI accuracy values, but is more widely applicable to any method of obtaining CSI and CSI accuracy value.

According to some such aspects, each wireless device transmits the CSI accuracy information via a reverse feedback link to the network node 110a, 110b.

Thus, the obtaining N1, according to some aspects, comprises receiving N10, from each of the one or more wireless devices 120, 121, 122, a respective CSI accuracy value.

According to other aspects, the obtaining N1 comprises receiving N11, from each of the one or more wireless device, CSI accuracy related information. This CSI related information can then be used to determine the CSI accuracy value for use in the beam-forming.

In other words, according to some aspects, the obtaining N1 further comprises determining N111 for each of the one or more wireless devices, the corresponding CSI accuracy value based on the received CSI accuracy related information.

Some approaches of determining CSI accuracy value relates to estimated autocorrelation functions of channel estimates of wireless devices.

According to some such aspects, CSI accuracy information is obtained from an estimated autocorrelation function $R_k(l)$ of respective channel estimates for wireless devices. More precisely, let $\widehat{h}_k^t$ denote the channel vector estimate for wireless device $k$ at time $t$. Given that we use $N$ channel estimation samples to estimate $R_k(l)$, the autocorrelation function of the channel estimate for the kth wireless device is given by

$$R_k(l) = \frac{1}{N} \sum_{t=1}^{N} (\widehat{\boldsymbol{h}}_k^{t-l})^* \, \widehat{\boldsymbol{h}}_k^t,$$

for $l = 0, ..., (N - 1)$. According to this equation, the autocorrelation function $R_k(l)$ is time discrete, but can be interpolated to get a time continuous estimate of the autocorrelation function $R_k(t)$. A correlation value $\rho$ can finally be calculated by

$$\rho(t) = 1 - \left| \frac{R(t)}{R(0)} \right|,$$

where $t$ is the time between channel estimation and the actual transmission or, alternatively, the generation of the beam-forming vector. Furthermore, the accuracy of the CSI is affected by the channel estimation error, the noise power of the channel estimate can be used to determine the accuracy of the CSI.

Thus, according to one aspect, the CSI accuracy value is given by the channel correlation value $\rho$ discussed above.

According to other aspects, including those comprising the autocorrelation function discussed above, lapsed time from estimating a channel to its use in beam-forming, and the velocity of the wireless device plays important roles. This is because channel estimates become outdated or even obsolete as time passes, which has a de-grading effect on the CSI accuracy depending on the velocity of the wireless device and also on the dynamics of the channel and propagation environment. A stable propagation environment with mainly stationary scatterers or radio reflecting objects provide for more stable CSI, while the opposite is true for more dynamic propagation environments wherein a small lapsed time implies greater changes in CSI.

Thus, according to some aspects, the obtaining N1 further comprises, for each of the one or more wireless devices receiving N112 a time-stamp of CSI, and determining N113 the corresponding CSI accuracy value based on a lapsed time duration from the time-stamp to a time instant of the generating N5.

According to some other aspects, the obtaining N1 further comprises, for each of the one or more wireless devices, receiving N114 a velocity value of a wireless device, and determining N115 the corresponding CSI accuracy value based on the velocity of the wireless device.

According to another aspect, the CSI accuracy value is determined based on a signal to noise ratio (SNR) experienced by one or more wireless devices at a time instant of channel estimation, i.e., at a time instant of measuring a CSI accuracy related value.

According to yet another aspect, the CSI accuracy value is determined as a velocity or a Doppler spread value associated with a wireless device at a time instant of channel estimation and/or a time instant of beam-formed radio transmission or reception.

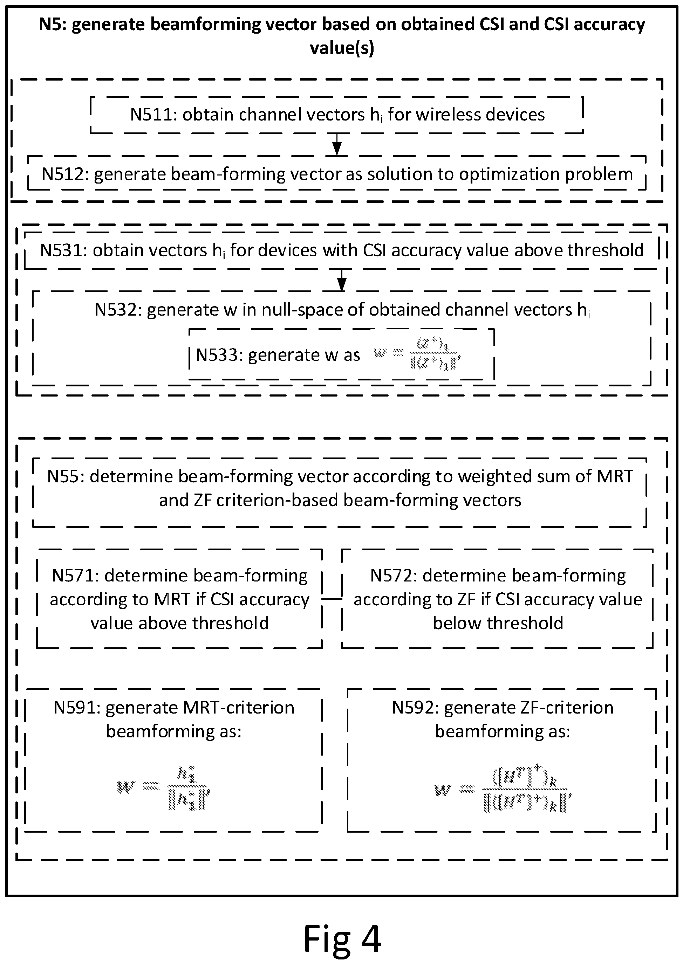

Figure 4 is a flowchart illustrating further details and aspects of methods performed in a network node. In particular, Figure 4 illustrates aspects of the generating N5.

The problem of designing a pre-coder or beam-forming vector that suits a given scenario with varying CSI accuracy over wireless devices can be formulated mathematically. More precisely, for wireless device $k$ we can formulate the following beam-forming optimization problem:

maximize $|\boldsymbol{w}_k^* \boldsymbol{h}_k|$
such that

$$1. |\boldsymbol{w}_k^* \boldsymbol{h}_i| < \tau_i, \qquad i = 1, ..., k-1, k+1, ..., K$$

$$2. \|\boldsymbol{w}\_k\| = 1.$$

where CSI accuracy values $\tau_i$ can be chosen based on the accuracy of the CSI for wireless device $i$. This problem can be solved by changing the equality constraint with inequality which makes the problem convex and thus easily solvable, or it can be solved via standard linear programming techniques. It is appreciated that by setting all impact factors $\tau_i$ to infinity, a beam-forming vector equivalent to a beam-forming vector derived from an MRT criterion is obtained, and with setting them to zero, a beam-forming vector equivalent to a beam-forming vector derived from a ZF criterion is obtained.

Thus, according to aspects, the generating N5 further comprises obtaining N511 a respective channel coefficient vector $\mathbf{h_i}$, indexed by i=1,...,N, for each wireless device out of the one or more wireless devices associated with CSI accuracy values $t_i$, and different from a first target wireless device associated with channel coefficient vector $\mathbf{h}'$, and generating N512 a beam-forming vector $\mathbf{w}$ for radio transmission to, or radio reception from, the first target wireless device as a solution to the beam-forming optimization problem defined above, i.e.,

maximize $|\mathbf{w}^*\mathbf{h}'|$ over $\mathbf{w}$
such that

$$|\mathbf{w}^*\mathbf{h}_i| < t_i, \qquad i = 1, \dots, N$$

$$\|\mathbf{w}\| = 1$$

where $\mathbf{a}^*$ denotes complex conjugate of vector $\mathbf{a}$, $|\,|$ denotes absolute value, and $\|\,\|$ denotes Euclidean vector norm.

Motivated at least in part by the above discussion, at least two approaches for implementing the present teaching has been developed, some of which will now be described.

An idea of a first approach, which is reminiscent of, but improves upon, zero-forcing, is to attempt to null-out interference from radio transmission only to the wireless devices for which we have accurate CSI available for generating the beam-forming vector or vectors. That is to set $\tau_i = 0$, if the CSI is accurate and to set $\tau_i = \infty$ if the CSI is not accurate enough. In this case, we can find a closed-form solution for the pre-coding problem.

According to an aspect, the accuracy of CSI is quantified by means of a threshold, which can be common to many wireless devices or set specifically for individual wireless devices. The threshold can be pre-determined and fixed or adjusted dynamically. A wireless device having a CSI accuracy value above this threshold is deemed to have a CSI which is accurate enough for use in beam-forming, or for being allowed a given impact on the beam-forming, in the above discussion.

To elaborate more on this idea, consider the ZF pre-coder in more detail. Mathematically, for each wireless device $k$, a beam-forming vector $\mathbf{w}_k$ is computed such that:

- $\mathbf{w}_k$ lies in the null-space of $\tilde{H}_k = [\mathbf{h}_1, \dots, \mathbf{h}_{k-1}, \mathbf{h}_{k+1}, \dots, \mathbf{h}_K]^T$, and

- Having satisfied the above condition, the received power for a target wireless device k is maximized.

Using the singular value decomposition (SVD) $\tilde{H}_k = U\,\Sigma\,V$, the $M$ - rank$(\tilde{H}_k)$ left most columns of $V$, here denoted by $\tilde{V}_k$, form a basis for the null-space of $\tilde{H}_k$, and hence are good candidates for satisfying the first condition above. In order to maximize the received power, we now find the SVD $\mathbf{h}_k^T\,\tilde{V}_k = \hat{U}\,\hat{\Sigma}\,\hat{V}$, and choose $\mathbf{w}_k = \gamma_k \tilde{V}_k\,\hat{V}_k$ where $\hat{V}_k$ is the singular vector corresponding to the maximum singular value of $\mathbf{h}_k^T\,\tilde{V}_k$ and $\gamma_k$ is a scalar that is used so that the precoding vector has norm 1. The above procedure can be simplified using the pseudo-inverse to $H$, and choosing $\mathbf{w}_k = \gamma_k \langle [H^T]^+ \rangle_k$.

Thus, according to some aspects, the generating N5 further comprises obtaining N531 a respective channel coefficient vector $\mathbf{h_i}$ for each of the one or more wireless devices being associated with CSI accuracy value equal to or above a threshold and different from a first target wireless device, and generating N532 a beam-forming vector for radio transmission to, or radio reception from, the first target wireless device as a vector in a null-space of a transposed matrix $\tilde{H}$ having columns given by said channel coefficient vectors $\mathbf{h_i}$.

The above suggests a simplified approach to handle scenarios where accurate CSI is only available for a subset of wireless devices. More accurately, for each wireless device $k$ we first remove the column $\mathbf{h}_j$ for all $j = 1,...,k - 1, k + 1,...,K$ that the CSI is not accurate according to some criterion, e.g., one or more of the accuracy criteria discussed above. For instance, the accuracy can be quantified using the correlation between the channel at the time of measurement and the time of the transmission, and a threshold $\varepsilon_k$ for each wireless device $k$. That is, we define

$$\tilde{H}_k = \left[\mathbf{h}_j\right]^T, \qquad \forall j = 1, \dots, k - 1, k + 1, \dots K, \qquad \text{and } \rho_j < \epsilon_j.$$

Then,

$$w_k = \frac{\langle Z^+ \rangle_1}{\|\langle Z^+ \rangle_1\|}, \text{ where } Z \triangleq \left[ \boldsymbol{h}_k, \widetilde{H}_k^T \right]^T.$$

In other words, according to some aspects, the generating N532 further comprises generating N533 the beam-forming vector as $\boldsymbol{w} = \frac{\langle Z^+ \rangle_1}{\|\langle Z^+ \rangle_1\|}$, where $\langle Z^+ \rangle_1$ denotes the first column of the pseudo-inverse to matrix $Z = [\mathbf{h'}, \widetilde{H}^T]^T$, and **h'** denotes a channel coefficient vector of the first target wireless device.

The idea in a second approach, implementation, or embodiment of the present teaching, is to combine two linear pre-coders, namely MRT and ZF, in such a way that the overall system throughput is increased. More precisely, we combine MRT and ZF pre-coders using the following expression for each wireless device;

$$W_{\text{PROP}} = [W_{\text{MRT}} D_{\text{MRT}} + W_{\text{ZF}} D_{\text{ZF}}]$$

where $D_{\text{MRT}}$ and $D_{\text{ZF}}$ are $K \times K$ (preferably diagonal) matrices that can be further optimized depending on the accuracy for each wireless device CSI. Note that, following a principle of having unit-norm pre-coders, we need to normalize $W_{\text{PROP}}$ such that each column of it has unit power norm.

Thus, according to some aspects, the one or more wireless devices constitutes a receiving target wireless device, and the generating N5 further comprises determining N55 a beam-forming vector for radio transmission to, or radio reception from, the first target wireless as a sum, weighted by a CSI accuracy value t of the receiving target wireless device, of a maximum ratio transmission, MRT, criterion and a zero-forcing, ZF, criterion beam-forming vector. The beam-forming vector is then given by

$$\boldsymbol{w} = t * \boldsymbol{w}_{MRT} + (1 - t) * \boldsymbol{w}_{ZF}$$

wherein t assumes values between zero and one, $\boldsymbol{w}_{MRT}$ denotes a beam-forming vector derived according to an MRT criterion, and $\boldsymbol{w}_{ZF}$ denotes a beam-forming vector derived according to a ZF criterion.

As for the first approach discussed above, the second approach can be executed by dynamically scaling the contributions of the MRT and ZF beam-forming criteria to the generated beam-forming vector, and it can also be executed in a more hard way by assigning weights of either zero or one for each **w** above, i.e., using either pure MRT or pure ZF for each generated beam-forming vector.

Using the argument that when the CSI is not accurate enough, the MRT pre-coder is not effective since the channel direction is not known accurately, the following simplified rule to find $D_{\text{MRT}}$ and $D_{\text{ZF}}$ is hereby disclosed:

$$D_{\text{MRT}} = \text{diag}(\boldsymbol{x}), \quad \text{and } D_{\text{ZF}} = \text{diag}(1 - \boldsymbol{x})$$

where,

$$x_k = \begin{cases} 1, & \rho_k < \epsilon_k \\ 0, & \text{otherwise.} \end{cases}$$

According to this approach, when the correlation between the channel at the time of measurement and the time of the transmission for some wireless device falls below a certain threshold, pre-determined or dynamically adjusted, MRT transmission is not used for that wireless device. Therefore, according to this algorithm the transmission of data for users with accurate CSI causes interference to other users. However, this scheme is suitable in noise-limited situations where the performance is limited by the thermal noise (rather than the interference from other UEs). On the other hand, in scenarios with high transmitted power, where in general ZF outperforms the MRT, it is expected that the first approach has a better performance compared to the second scheme.

Accordingly, according to some aspects, the one or more wireless devices constitutes a receiving target wireless device, and the generating N5 further comprises determining N571 a beam-forming vector for radio transmission to, or radio reception from, the first target wireless device according to a maximum ratio transmission, MRT, criterion if the receiving target wireless device is associated with a CSI accuracy value above a threshold, and determining N572 the beam-forming vector according to a zero-forcing, ZF, criterion in case the target wireless device is associated with a CSI accuracy value below the threshold.

The actual MRT and ZF beam-forming vectors are, according to aspects, derived according to standard definition, which standard definition is herein taken to mean determining N591 the beam-forming vector according to the

MRT criterion as $\boldsymbol{w}_{MRT} = \frac{\boldsymbol{h}_k^*}{\|\boldsymbol{h}_k^*\|}$, $\boldsymbol{h}_k$ denoting a channel coefficient vector of the receiving target wireless device, $\mathbf{a}^*$ denoting complex conjugate of vector $\mathbf{a}$, and $\|\ \|$ denoting Euclidean vector norm, and determining N592 the beam-forming vector according to the ZF criterion as $\boldsymbol{w}_{ZF} = \frac{\langle [H^T]^+\rangle_k}{\|\langle [H^T]^+\rangle_k\|}$, $\langle A\rangle_k$ denoting the k:th column of matrix A, $[H^T]^+$ denoting the pseudo-inverse to transposed matrix H having columns given by said channel coefficient vectors $\mathbf{h_i}$ of the one or more wireless devices, and $\|\ \|$ denoting Euclidean vector norm, where the k:th column $\langle H\rangle_k$ of H corresponds to a channel coefficient vector of the receiving target wireless device.

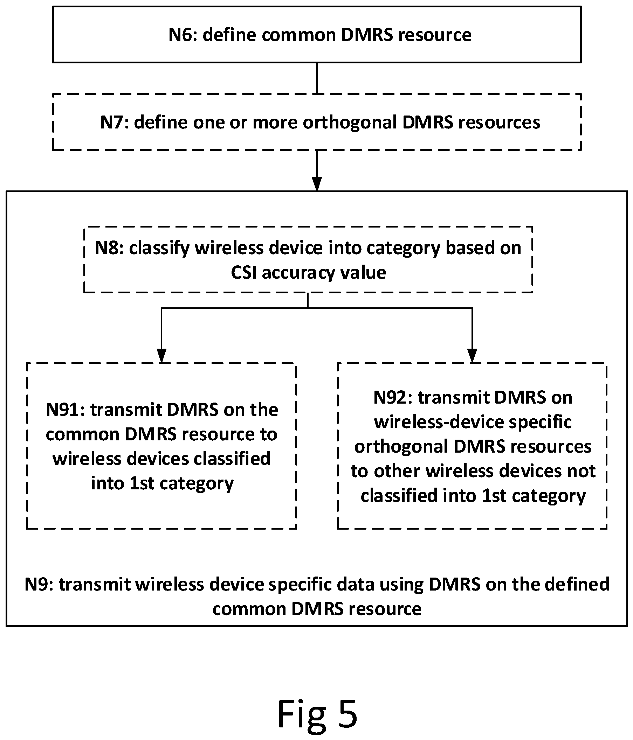

Figure 5 is a flowchart illustrating aspects of methods performed in a wireless communication system comprising a network node.

Another important aspect of systems deploying MU-MIMO is the transmission of pilots that are necessary for the coherent demodulation and detection of transmitted data. These pilots are often referred to as demodulation reference signal (DMRS) and consume some part of channel time/frequency resources that could otherwise be used for payload data. Note that DMRS is different from the CSI-reference signal (CSI-RS) or common reference signal (CRS) that are used to enable the wireless devices to measure the channels which are then reported back via a reverse link to a network node 110a, 110b. DMRS, as explained above, is used for coherent demodulation of transmitted symbols and hence it is interleaved among the payload data for each UE. That is, the DMRS as opposed to CSI-RS and CRS, is transmitted only during the payload transmission for each UE and is thus pre-coded using the pre-coder matrix used for the payload transmission. In fact, recent studies have indicated that it is not efficient in terms of energy consumption to use CSI-RS and CRS, at least not as frequently as it is done in LTE and LTE-advanced today.

In order to enable the wireless devices to estimate the channel, the DMRS transmission for each wireless device must be orthogonal to that of the other wireless device. In practice, therefore, we need *K* orthogonal DMRS transmissions to multiplex *K* wireless device which consequently require *K* channel resources. However, using the proposed idea in this document, we are able to reduce this number substantially. The idea is to define two sets of reference signals: (i) one set including *K* wireless device specific orthogonal reference signals and (ii) a common set including a single reference signal. Using the pre-coding scheme according to the first approach above, we can use the common DMRS for all wireless device s for which we have accurate CSI, and use the wireless device specific DMRS for the wireless device s for whom we have no accurate CSI. This is because the transmission according to the proposed pre-coding scheme caused no interference for wireless device s with accurate CSI. This means that in scenarios with accurate CSI for all wireless device, we effectively need only one DMRS transmission. Note that this procedure requires some control signaling in order to inform the wireless device about which DMRS setting is used

In other words, the present teaching incorporates a method comprising defining N6 a common demodulation reference signal, DMRS, resource for radio transmission to two or more target wireless devices, and transmitting N9 respective wireless device specific data using DMRS on the common DMRS resource to a wireless devices associated with a CSI accuracy value satisfying one or more accuracy criteria.

It is appreciated that this method is applicable on its own right, i.e., it does not necessarily require the above described method aspects.

According to some aspects, the method further comprises classifying N8 a wireless devices into a first category of wireless devices if the respective CSI accuracy value of the wireless device is above a CSI accuracy value threshold.

According to some other aspects, the method further comprises transmitting N91 wireless device specific data using DMRS on the common DMRS resource to a wireless devices classified into the first category of wireless devices.

According to some further aspects, the method further comprises defining N7 one or more orthogonal DMRS resources for radio transmission to one or more respective target wireless devices, and transmitting N92 wireless device specific data using DMRS on one of the orthogonal DMRS resources to a wireless device not classified into the first category of wireless devices.

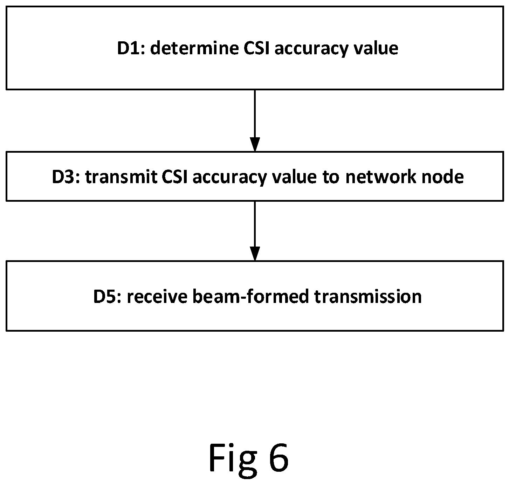

Figure 6 is a flowchart illustrating aspects of methods performed in a wireless device. In particular, there is illustrated a method performed in a wireless device 120, 121, 122 for receiving a radio transmission. The radio transmission is here assumed to be beam-formed by a beam-forming vector generated by a network node 110a, 110b as discussed above. The method comprises determining D1 a CSI accuracy value, transmitting D3 the CSI accuracy value to the network node 110a,110b, and receiving D5 the radio transmission with beam-forming generated based on the transmitted CSI accuracy value.

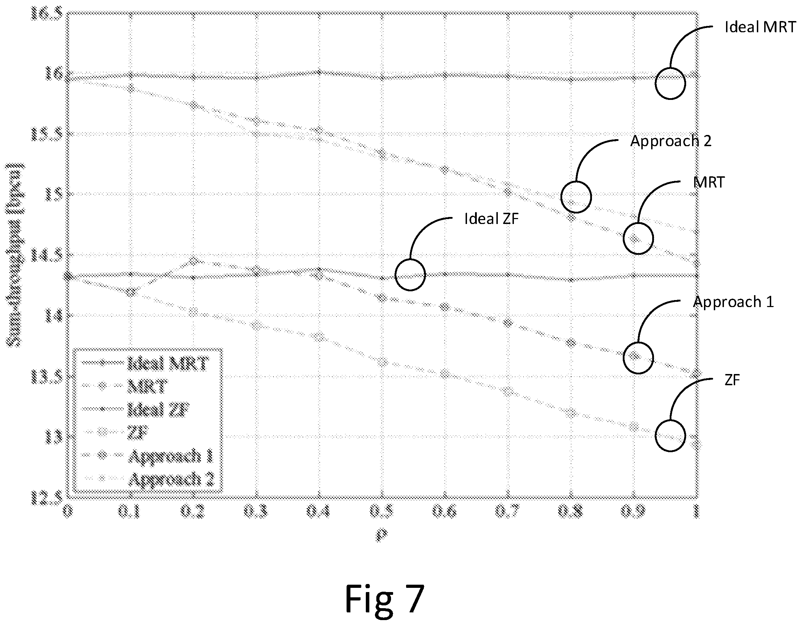

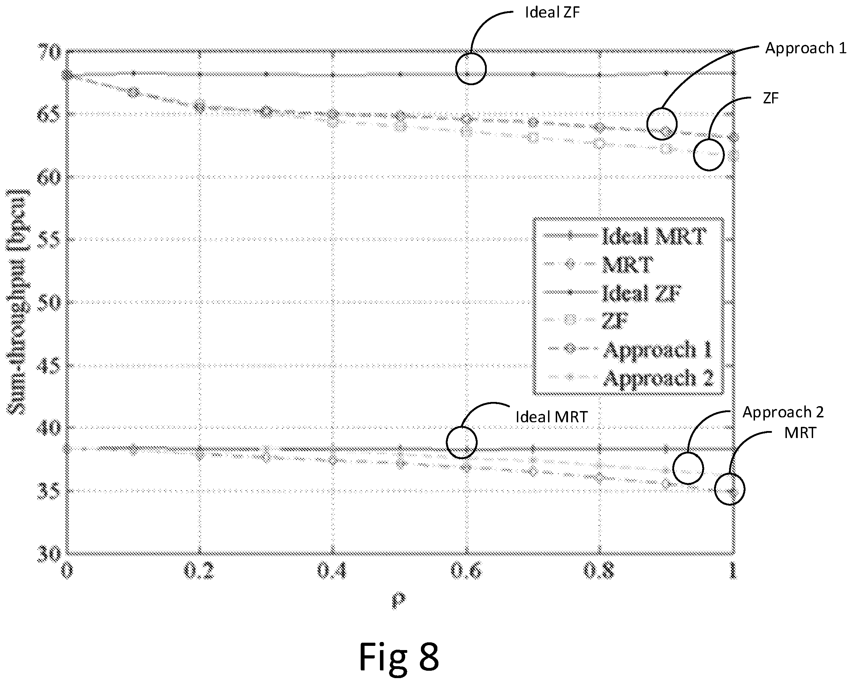

To illustrate the potentials of proposed schemes and in order to validate some of the above statements, studies have been performed using computer simulation. Results from these computer simulations are illustrated in Figure 7, which is a graph showing sum-throughput on the y-axis versus channel correlation on the x-axis, and in Figure 8, which is a graph showing sum-throughput on the y-axis versus channel correlation on the x-axis.

In these studies, we have assumed that a system with $K = 20$ users and $N = 50$ antennas is serviced by the first network node 110a. Here, we have assumed that the channels for wireless devices 3 to 20 does not change (that is $\rho_k = 0$, $k = 3, ...,20$) and we model the channel aging for user 1 and 2 statistically as mentioned above via channel correlation given as $1 - \rho$ for different values of $\rho$. We further assume $\varepsilon_k = 0.2$ for all users. Figures 7 and 8 illustrate the sum-throughput for the system with transmitted SNR of -3 and 10 dB, respectively. For comparison, we have also plotted the curves for ideal MRT and ZF pre-coders with the perfect channel knowledge (no channel aging) and also with imperfect channel knowledge (considering the channel aging). As can be seen from the presented results, the proposed schemes outperform the respective conventional schemes. That is, advantageously, the first approach has better performance than pure ZF and approach two has better performance than pure MRT pre-coding. As for comparison of the two illustrative approaches for implementing the teaching herein, we see as expected that the first approach outperforms the second in high transmitted power and vice versa.

Figure 9 is a block diagram schematically illustrating aspects of a network node 110c. The network node is an implementation of aspects discussed above in connection to network nodes 110a and 110b. The network node 110c comprises processing means 210 connected to a memory device 230 for storing data and computer programs. The network node 110c also comprises a communication interface 220 for communicating with outside network elements, such as wireless devices or other network nodes.

Figure 9 thus illustrates a network node 110c configured to generate at least one beam-forming vector for radio transmission to, or radio reception from, at least one target wireless device 120. The network node 110c comprises processing means 210 configured to obtain, for one or more wireless devices 120, 121, 122, respective channel state information, CSI, and CSI accuracy value.

The processing means 210 are furthermore configured to generate the at least one beam-forming vector based on the CSI and corresponding CSI accuracy value. Here, a CSI associated with a high CSI accuracy value is given equal or higher preference in the generating compared to a CSI associated with a CSI accuracy value lower than the high CSI accuracy value.

According to aspects, the processing means 210 is further configured to generate the at least one beam-forming vector to protect wireless devices associated with a first range of CSI accuracy values from a radio transmission interference prior to protecting wireless devices associated with a range of CSI accuracy values lower than the first range from the radio transmission interference.

According to aspects, the processing means 210 is further configured to generate the at least one beam-forming vector to improve a received signal quality of a receiving target wireless device when the receiving target wireless device is associated with a high CSI accuracy value, and to reduce a radio transmission interference to other wireless devices when the receiving target wireless device is associated with a CSI accuracy value lower than the high CSI accuracy value.

According to aspects, the processing means 210 is further configured to receive, from each of the one or more wireless devices 120, 121, 122, a respective CSI accuracy value.

According to aspects, the processing means 210 is further configured to receive, from each of the one or more wireless device, CSI accuracy related information.

According to aspects, the processing means 210 is further configured to determine, for each of the one or more wireless devices, the corresponding CSI accuracy value based on the received CSI accuracy related information.

According to aspects, the processing means 210 is further configured to obtain a respective channel coefficient vector $\mathbf{h_i}$, indexed by i=1,...,N, for each wireless device out of the one or more wireless devices associated with CSI accuracy values $t_i$, and different from a first target wireless device associated with channel coefficient vector $\mathbf{h'}$, and to generate a beam-forming vector $\mathbf{w}$ for radio transmission to, or radio reception from, the first target wireless device as a solution to a constrained optimization problem given by

maximize $|\mathbf{w}^*\mathbf{h'}|$ over $\mathbf{w}$
such that

$$|\mathbf{w}^*\mathbf{h}_i| < t_i, \qquad i = 1, ..., N$$

$$\|\mathbf{w}\| = 1$$

where **a\*** denotes complex conjugate of vector **a**, | | denotes absolute value, and ‖ ‖ denotes Euclidean vector norm.

According to aspects, the processing means 210 is further configured to obtain a respective channel coefficient vector $\mathbf{h_i}$ for each of the one or more wireless devices being associated with CSI accuracy value equal to or above a threshold and different from a first target wireless device, and to generate a beam-forming vector for radio transmission to, or radio reception from, the first target wireless device as a vector in a null-space of a transposed matrix $\tilde{H}$ having columns given by said channel coefficient vectors $\mathbf{h_i}$.

According to aspects, the processing means 210 is further configured to generate the beam-forming vector as

$$\boldsymbol{w} = \frac{\langle Z^+ \rangle_1}{\| \langle Z^+ \rangle_1 \|},$$ $\langle Z^+ \rangle_1$ denoting the first column of the pseudo-inverse to matrix $Z = [\mathbf{h'}, \tilde{H}^T]^T$, and **h'** denoting a channel coefficient vector of the first target wireless device.

According to aspects, the one or more wireless devices constitutes a receiving target wireless device, and the processing means 210 is further configured to determine a beam-forming vector for radio transmission to, or radio reception from, the first target wireless as a sum, weighted by a CSI accuracy value t of the receiving target wireless device, of a maximum ratio transmission, MRT, criterion and a zero-forcing, ZF, criterion beam-forming vector. The beam-forming vector given by

$$\boldsymbol{w} = t * \boldsymbol{w}_{MRT} + (1 - t) * \boldsymbol{w}_{ZF}$$

wherein t assumes values between zero and one, $\boldsymbol{w}_{MRT}$ denotes a beam-forming vector derived according to an MRT criterion, and $\boldsymbol{w}_{ZF}$ denotes a beam-forming vector derived according to a ZF criterion.

According to aspects, the one or more wireless devices constitutes a receiving target wireless device, and the processing means 210 is further configured to determine a beam-forming vector for radio transmission to, or radio reception from, the first target wireless device according to a maximum ratio transmission, MRT, criterion if the receiving target wireless device is associated with a CSI accuracy value above a threshold, and to determine the beam-forming vector according to a zero-forcing, ZF, criterion in case the target wireless device is associated with a CSI accuracy value below the threshold.

According to aspects, the processing means 210 is further configured to determine the beam-forming vector according to the MRT criterion as $\boldsymbol{w}_{MRT} = \frac{\boldsymbol{h}_k^*}{\| \boldsymbol{h}_k^* \|},$ $\boldsymbol{h}_k$ denoting a channel coefficient vector of the receiving target wireless device, **a\*** denoting complex conjugate of vector **a**, and ‖ ‖ denoting Euclidean vector norm.

According to aspects, the processing means 210 is further configured to determine the beam-forming vector according to the ZF criterion as $\boldsymbol{w}_{ZF} = \frac{\langle [H^T]^+ \rangle_k}{\| \langle [H^T]^+ \rangle_k \|},$ $\langle A \rangle_k$ denoting the k:th column of matrix A, $[H^T]^+$ denoting the pseudo-inverse to transposed matrix H having columns given by said channel coefficient vectors $\mathbf{h_i}$ of the one or more wireless devices, and ‖ ‖ denoting Euclidean vector norm, where the k:th column $\langle H \rangle_k$ of H corresponds to a channel coefficient vector of the receiving target wireless device.

According to aspects, the processing means 210 is further configured to define a common demodulation reference signal, DMRS, resource for radio transmission to two or more target wireless devices, and to transmit respective wireless device specific data using DMRS on the common DMRS resource to a wireless device associated with a CSI accuracy value satisfying one or more accuracy criteria.

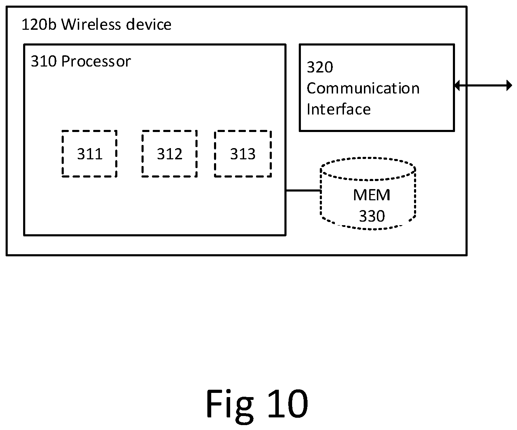

Figure 10 is a block diagram schematically illustrating aspects of a wireless device 120b. The wireless device 120b is an implementation or realization of aspects discussed above in connection to wireless devices 120, 121, and 122. The wireless device 120b comprises processing means 310 connected to a memory device 330 for storing data and computer programs. The wireless device 120b also comprises a communication interface 320 for communicating with outside network elements, such as other wireless devices or network nodes.

Figure 10 thus illustrates a wireless device 120b configured to receive a radio transmission, the radio transmission beam-formed by a beam-forming vector generated by a network node 110c. The wireless device 120b comprises processing means 310 configured to determine a CSI accuracy value, to transmit the CSI accuracy value to the network node 110a, 110b, and to receive the radio transmission with beam-forming generated based on the transmitted CSI accuracy value.

Referring back to Figure 1, there is also disclosed herein a wireless communication system 100 comprising a network node 110a, 110b, 110c according to the above discussion, and one or more wireless devices 120, 120b, 121, 122 as discussed herein.

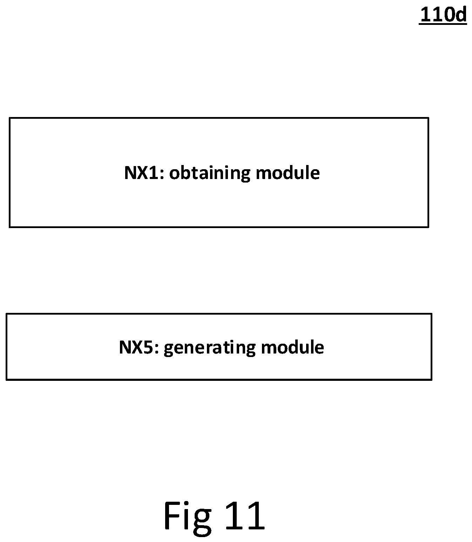

Figure 11 is a block diagram schematically illustrating aspects of a network node 110d configured to implement or realize at least some of the methods discussed herein in connection to network nodes 110a, 110b, 110c. In particular, there is illustrated a network node 110d configured to generate at least one beam-forming vector for radio transmission to, or radio reception from, at least one target wireless device 120, the network node 110d comprises an obtaining module NX1 configured to obtain, for one or more wireless devices 120, 121, 122, respective channel state information, CSI, and CSI accuracy value. The network node also comprises a generating module NX5 configured to generate the at least one beam-forming vector based on the CSI and corresponding CSI accuracy value, wherein a CSI associated with a high CSI accuracy value is given equal or higher preference in the generating compared to a CSI associated with a CSI accuracy value lower than the high CSI accuracy value.

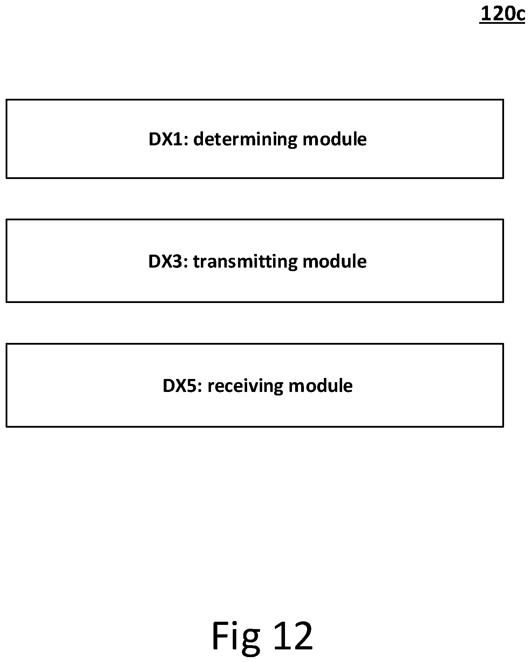

Figure 12 is a block diagram schematically illustrating aspects of a wireless device 120c configured to implement or realize at least some of the methods discussed herein in connection to a wireless device 120a, 120b. In particular, there is a wireless device 120c configured to receive a radio transmission, the radio transmission beam-formed by a beam-forming vector generated by a network node 110d. The wireless device 120c comprises a determining module DX1 configured to determine a CSI accuracy value, a transmitting module DX3 configured to transmit the CSI accuracy value to the network node 110d, and a receiving module DX5 configured to receive the radio transmission with beam-forming generated based on the transmitted CSI accuracy value.

The various aspects of the methods described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc., that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

**Claims**

1. A method, performed in a network node (110a, 110b), of generating at least one beam-forming vector for radio transmission to, or radio reception from, at least one target wireless device (120), the method comprising:

   - obtaining (N1), for one or more wireless devices (120, 121, 122), respective channel state information, CSI, and CSI accuracy value; and
   - generating (N5) the at least one beam-forming vector based on the CSI and corresponding CSI accuracy value, wherein a CSI associated with a high CSI accuracy value is given equal or higher preference in the generating (N5) compared to a CSI associated with a CSI accuracy value lower than the high CSI accuracy value, and wherein obtaining (N1) the CSI accuracy value comprises:

      - receiving (N112) a time-stamp of the CSI from the one or more wireless devices (120, 121, 122); and
      - determining (N113) the corresponding CSI accuracy value based on a lapsed time duration between the received time-stamp of the CSI and a time instant of generating (N5) the at least one beam-forming vector,

   wherein each of the one or more wireless devices (120, 121, 122) having a CSI accuracy value above a threshold is considered to have an accurate CSI for use in beam-forming, wherein the generating (N5) further comprises:

      - obtaining (N511) a respective channel coefficient vector $\mathbf{h}_i$, indexed by i = 1,...,N, for each wireless device of the one or more wireless devices (120, 121, 122) associated with CSI accuracy values $t_i$, and different from a first target wireless device associated with a channel coefficient vector $\mathbf{h'}$; and
      - generating (N512) a beam-forming vector $\mathbf{w}$ for radio transmission to, or radio reception from, the first target wireless device as a solution to a constrained optimization problem given by:

         maximize $|\mathbf{w}^*\mathbf{h'}|$ over $\mathbf{w}$
         such that

$$|\mathbf{w}^*\mathbf{h}_i| < t_i, \quad i = 1,...,N;$$

and

$$\|\boldsymbol{w}\|=1$$

where **a\*** denotes complex conjugate of vector **a**, | | denotes an absolute value, and ‖ ‖ denotes an Euclidean vector norm;

and wherein, for a subset of the one or more wireless devices (120, 121, 122) having accurate CSI, the generating (N5) further comprises:

- obtaining (N531) a respective channel coefficient vector $\mathbf{h_i}$ for each of the one or more wireless devices (120, 121, 122) being associated with a CSI accuracy value equal to or above the threshold and different from the first target wireless device; and
- generating (N532) a beam-forming vector for radio transmission to, or radio reception from, the first target wireless device as a vector in a null-space of a transposed matrix $\tilde{H}$ having columns given by said channel coefficient vectors $\mathbf{h_i}$, wherein the generating (N532) further comprises generating (N533) the beam-forming vector as $\boldsymbol{w} = \frac{\langle Z^+\rangle_1}{\|\langle Z^+\rangle_1\|}$, $\langle Z^+\rangle_1$ denoting a first column of pseudo-inverse to matrix $Z = [\mathbf{h'},\tilde{H}^T]^T$, and **h'** denoting a channel coefficient vector of the first target wireless device.

2. The method according to claim 1, the generating (N5) further comprising protecting wireless devices associated with a first range of CSI accuracy values from a radio transmission interference prior to protecting wireless devices associated with a range of CSI accuracy values lower than the first range of CSI accuracy values from the radio transmission interference.

3. The method according to claim 1, the generating (N5) further comprising improving a received signal quality of a receiving target wireless device when the receiving target wireless device is associated with a high CSI accuracy value, and reducing a radio transmission interference to other wireless devices when the receiving target wireless device is associated with a CSI accuracy value lower than the high CSI accuracy value.

4. The method according to any of claim 1 or 3, wherein the one or more wireless devices (120, 121, 122) constitutes a receiving target wireless device, and wherein the generating (N5) further comprises:

- determining (N55) a beam-forming vector for radio transmission to, or radio reception from, the first target wireless device as a sum, weighted by a CSI accuracy value t of the receiving target wireless device, of a maximum ratio transmission, MRT, criterion and a zero-forcing, ZF, criterion beam-forming vector, the beam-forming vector being given by:

$$\boldsymbol{w} = t * \boldsymbol{w}_{MRT} + (1-t) * \boldsymbol{w}_{ZF},$$

wherein t assumes values between zero and one, $\boldsymbol{w}_{MRT}$ denotes a beam-forming vector derived according to an MRT criterion, and $\boldsymbol{w}_{ZF}$ denotes a beam-forming vector derived according to a ZF criterion.

5. The method according to any of claim 1 or 3, wherein the one or more wireless devices (120, 121, 122) constitutes a receiving target wireless device, and wherein the generating (N5) further comprises:

- determining (N571) a beam-forming vector for radio transmission to, or radio reception from, the first target wireless device according to a maximum ratio transmission, MRT, criterion if the receiving target wireless device is associated with a CSI accuracy value above the threshold; and
- determining (N572) the beam-forming vector according to a zero-forcing, ZF, criterion in case the receiving target wireless device is associated with a CSI accuracy value below the threshold.

6. The method according to claim 4 or 5, wherein the determining (N55, N571) further comprising:

- determining (N591) the beam-forming vector according to the MRT criterion as $\boldsymbol{w}_{MRT} = \frac{\boldsymbol{h}_k^*}{\|\boldsymbol{h}_k^*\|},$ $\boldsymbol{h}_k$ denoting a channel coefficient vector of the receiving target wireless device, **a*** denoting complex conjugate of vector **a**, and ‖ ‖ denoting the Euclidean vector norm.

7. The method according to any of claims 4-6, wherein the determining (N55, N572) further comprising:

- determining (N592) the beam-forming vector according to the ZF criterion as $\boldsymbol{w}_{ZF} = \frac{\langle[H^T]^+\rangle_k}{\|\langle[H^T]^+\rangle_k\|},$ $\langle A\rangle_k$ denoting the k:th column of matrix A, $[H^T]^+$ denoting pseudo-inverse to transposed matrix H having columns given by said channel coefficient vectors $\boldsymbol{h}_i$ of the one or more wireless devices (120, 121, 122), and ‖ ‖ denoting the Euclidean vector norm, wherein the k:th column $\langle H\rangle_k$ of H corresponds to a channel coefficient vector of the receiving target wireless device.

8. A computer program comprising a computer program code which, when executed in a network node (110a, 110b), causes the network node (110a, 110b) to execute a method according to any of claims 1-7.

9. A network node (110c) configured to generate at least one beam-forming vector for radio transmission to, or radio reception from, at least one target wireless device (120), the network node (110c) comprising a processing means (210) configured to:

- obtain, for one or more wireless devices (120, 121, 122), respective channel state information, CSI, and CSI accuracy value; and
- generate the at least one beam-forming vector based on the CSI and corresponding CSI accuracy value, wherein a CSI associated with a high CSI accuracy value is given equal or higher preference in the generation compared to a CSI associated with a CSI accuracy value lower than the high CSI accuracy value, and wherein the processing means (210) is further configured to:

- receive a time-stamp of the CSI from the one or more wireless devices (120, 121, 122); and
- determine the obtained corresponding CSI accuracy value based on a lapsed time duration between the received time-stamp of the CSI and a time instant of the generation of the at least one beam-forming vector, wherein each of the one or more wireless devices (120, 121, 122) having a CSI accuracy value above a threshold is considered to have an accurate CSI for use in beam-forming, wherein the processing means (210) is further configured to:
- obtain a respective channel coefficient vector $\boldsymbol{h}_i$, indexed by i=1,...,N, for each wireless device of the one or more wireless devices (120, 121, 122) associated with CSI accuracy values $t_i$, and different from a first target wireless device associated with a channel coefficient vector **h'**; and
- generate a beam-forming vector **w** for radio transmission to, or radio reception from, the first target wireless device as a solution to a constrained optimization problem given by:

maximize $|\boldsymbol{w}^*\boldsymbol{h'}|$ over **w**
such that

$$|\boldsymbol{w}^*\boldsymbol{h}_i| < t_i, \quad i=1,...,N;$$

and

$$\|\boldsymbol{w}\|=1$$

where **a*** denotes complex conjugate of vector **a**, | | denotes an absolute value, and ‖ ‖ denotes an Euclidean vector norm;

and wherein, for a subset of the one or more wireless devices (120, 121, 122) having accurate CSI, the processing means (210) is further configured to:

16

- obtain a respective channel coefficient vector $\mathbf{h_i}$ for each of the one or more wireless devices (120, 121, 122) being associated with a CSI accuracy value equal to or above the threshold and different from the first target wireless device; and
- generate a beam-forming vector for radio transmission to, or radio reception from, the first target wireless device as a vector in a null-space of a transposed matrix $\tilde{H}$ having columns given by said channel coefficient vectors $\mathbf{h_i}$, wherein the generation of the beam-forming vector further comprises generation of the beam-forming vector as $w = \frac{\langle Z^+ \rangle_1}{\|\langle Z^+ \rangle_1\|}$, $\langle Z^+ \rangle_1$ denoting a first column of pseudo-inverse to matrix $Z = [\mathbf{h'}, \tilde{H}^T]^T$, and $\mathbf{h'}$ denoting a channel coefficient vector of the first target wireless device.

**Patentansprüche**

1. Verfahren zur Erzeugung mindestens eines Strahlformungsvektors für eine Funksendung zu oder einen Funkempfang von mindestens einer drahtlosen Zielvorrichtung (120), durchgeführt in einem Netzknoten (110a, 110b), wobei das Verfahren Folgendes umfasst:

    - Erhalten (N1) einer jeweiligen Kanalzustandsinformation (CSI) und eines CSI-Genauigkeitswerts für eine oder mehrere drahtlose Vorrichtungen (120, 121, 122); und
    - Erzeugen (N5) des mindestens einen Strahlformungsvektors auf Grundlage der CSI und des entsprechenden CSI-Genauigkeitswerts, wobei eine CSI, die mit einem hohen CSI-Genauigkeitswert verknüpft ist, eine gleiche oder höhere Präferenz beim Erzeugen (N5) erhält, verglichen mit einer CSI, die mit einem niedrigeren CSI-Genauigkeitswert als dem hohen CSI-Genauigkeitswert verknüpft ist, und wobei Erhalten (N1) des CSI-Genauigkeitswerts Folgendes umfasst:
    - Empfangen (N112) eines Zeitstempels der CSI von der einen oder den mehreren drahtlosen Vorrichtungen (120, 121, 122); und
    - Bestimmen (N113) des entsprechenden CSI-Genauigkeitswerts auf Grundlage einer verstrichenen Zeitdauer zwischen dem empfangenen Zeitstempel der CSI und einem Zeitpunkt des Erzeugens (N5) des mindestens einen Strahlformungsvektors, wobei bei jeder der einen oder mehreren drahtlosen Vorrichtungen (120, 121, 122) mit einem CSI-Genauigkeitswert über einem Schwellenwert gilt, dass sie eine genaue CSI zur Verwendung bei der Strahlformung aufweist, wobei das Erzeugen (N5) ferner Folgendes umfasst:
    - Erhalten (N511) eines jeweiligen Kanalkoeffizientenvektors $\mathbf{h_i}$ mit dem Index i = 1,...,N für jede drahtlose Vorrichtung der einen oder mehreren drahtlosen Vorrichtungen (120, 121, 122), die mit CSI-Genauigkeitswerten $\mathbf{t_i}$ verknüpft sind und sich von einer ersten drahtlosen Zielvorrichtung, die mit einem Kanalkoeffizientenvektor $\mathbf{h'}$ verknüpft ist, unterscheiden; und
    - Erzeugen (N512) eines Strahlformungsvektors $\mathbf{w}$ für eine Funksendung zu oder einen Funkempfang von der ersten drahtlosen Zielvorrichtung als Lösung für ein Problem der eingeschränkten Optimierung, gegeben durch:

        maximiere $|\mathbf{w^*h'}|$ über $\mathbf{w}$
        so dass

$$\left| \mathbf{w^* h_i} \right| < t_i, \quad i = 1, ..., N ;$$

        und

$$\|\mathbf{w}\| = 1$$

        wobei $\mathbf{a^*}$ eine Komplexkonjugierte von Vektor $\mathbf{a}$ bezeichnet, $| \, |$ einen absoluten Wert bezeichnet und $\| \, \|$ eine euklidische Vektornorm bezeichnet;
        und wobei für eine Teilmenge der einen oder mehreren drahtlosen Vorrichtungen (120, 121, 122) mit genauer CSI das Erzeugen (N5) ferner Folgendes umfasst:

        - Erhalten (N531) eines jeweiligen Kanalkoeffizientenvektors $\mathbf{h_i}$ für jede der einen oder mehreren drahtlosen Vorrichtungen (120, 121, 122), die mit einem CSI-Genauigkeitswert gleich oder über dem Schwellenwert verknüpft sind und sich von der ersten drahtlosen Zielvorrichtung unterscheiden; und

- Erzeugen (N532) eines Strahlformungsvektors für eine Funksendung zu oder einen Funkempfang von der ersten drahtlosen Vorrichtung als Vektor in einem Nullraum einer transponierten Matrix $\tilde{H}$ mit Spalten, die durch die Kanalkoeffizientenvektoren $\boldsymbol{h_i}$ gegeben sind, wobei das Erzeugen (N532) ferner Erzeugen (N533) des Strahlformungsvektors als $w = \frac{\langle Z^+ \rangle_1}{\|\langle Z^+ \rangle_1\|}$ umfasst, wobei $\langle Z^+ \rangle_1$ eine erste Spalte der Pseudoinversen zur Matrix $Z = [h', \tilde{H}^T]^T$ bezeichnet und $\boldsymbol{h'}$ einen Kanalkoeffizientenvektor der ersten drahtlosen Zielvorrichtung bezeichnet.

2. Verfahren nach Anspruch 1, wobei das Erzeugen (N5) ferner Schützen der drahtlosen Vorrichtungen, die mit einem ersten Bereich von CSI-Genauigkeitswerten verknüpft sind, vor einer Funksendeinterferenz vor dem Schützen drahtloser Vorrichtungen, die mit einem niedrigeren Bereich von CSI-Genauigkeitswerten als dem ersten Bereich von CSI-Genauigkeitswerten verknüpft sind, vor der Funksendeinterferenz umfasst.

3. Verfahren nach Anspruch 1, wobei das Erzeugen (N5) ferner Verbessern einer empfangenen Signalqualität einer empfangenden drahtlosen Zielvorrichtung umfasst, wenn die empfangende drahtlose Zielvorrichtung mit einem hohen CSI-Genauigkeitswert verknüpft ist, und Verringern einer Funksendeinterferenz zu anderen drahtlosen Vorrichtungen umfasst, wenn die empfangende drahtlose Zielvorrichtung mit einem niedrigeren CSI-Genauigkeitswert als dem hohem CSI-Genauigkeitswert verknüpft ist.

4. Verfahren nach einem der Ansprüche 1 oder 3, wobei die eine oder mehreren drahtlosen Vorrichtungen (120, 121, 122) eine empfangende drahtlose Zielvorrichtung bilden und wobei das Erzeugen (N5) ferner umfasst:

   - Bestimmen (N55) eines Strahlformungsvektors für eine Funksendung zu oder einen Funkempfang von der ersten drahtlosen Zielvorrichtung als eine Summe aus einem Strahlformungsvektor nach einem Maximum-Ratio-Transmission(MRT)-Kriterium und einem Zero-Forcing(ZF)-Kriterium, gewichtet mit einem CSI-Genauigkeitswert t der empfangenden drahtlosen Zielvorrichtung, wobei der Strahlformungsvektor gegeben ist durch:

   $$w = t * w_{MRT} + (1 - t) * w_{ZF},$$

   wobei $t$ Werte zwischen null und eins annimmt, $\boldsymbol{w_{MRT}}$ einen Strahlformungsvektor bezeichnet, der nach einem MRT-Kriterium abgeleitet wird, und $\boldsymbol{w_{ZF}}$ einen Strahlformungsvektor bezeichnet, der nach einem ZF-Kriterium abgeleitet wird.

5. Verfahren nach einem der Ansprüche 1 oder 3, wobei die eine oder mehreren drahtlosen Vorrichtungen (120, 121, 122) eine empfangende drahtlose Vorrichtung bilden und wobei das Erzeugen (N5) ferner Folgendes umfasst:

   - Bestimmen (N571) eines Strahlformungsvektors für eine Funksendung zu oder einen Funkempfang von der ersten drahtlosen Zielvorrichtung nach einem Maximum-Ratio-Transmission(MRT)-Kriterium, wenn die empfangende drahtlose Zielvorrichtung mit einem CSI-Genauigkeitswert über dem Schwellenwert verknüpft ist; und
   - Bestimmen (N572) des Strahlformungsvektors nach einem Zero-Forcing(ZF)-Kriterium im Fall, dass die empfangende drahtlose Zielvorrichtung mit einem CSI-Genauigkeitswert unter dem Schwellenwert verknüpft ist.

6. Verfahren nach Anspruch 4 oder 5, wobei das Bestimmen (N55, N571) ferner Folgendes umfasst:

   - Bestimmen (N591) des Strahlformungsvektors nach dem MRT-Kriterium als $w_{MRT} = \frac{h_k^*}{\|h_k^*\|}$, wobei $\boldsymbol{h_k}$ einen Kanalkoeffizientenvektor der empfangenden drahtlosen Zielvorrichtung bezeichnet, $a^*$ die Komplexkonjugierte des Vektors $\boldsymbol{a}$ bezeichnet und $\| \|$ die euklidische Vektornorm bezeichnet.

7. Verfahren nach einem der Ansprüche 4-6, wobei das Bestimmen (N55, N572) ferner Folgendes umfasst:

   - Bestimmen (N592) des Strahlformungsvektors nach dem ZF-Kriterium als $w_{ZF} = \frac{\langle [H^T]^+ \rangle_k}{\|\langle [H^T]^+ \rangle_k\|}$, wobei $\langle A \rangle_k$ die k-te Spalte der Matrix A bezeichnet, $[H^T]^+$ die Pseudoinverse zur transponierten Matrix H mit Spalten, die durch die Kanalkoeffizientenvektoren $\boldsymbol{h_i}$ der einen oder mehreren drahtlosen Vorrichtungen (120, 121, 122) gegeben sind, bezeichnet und ‖‖ die euklidische Vektornorm bezeichnet, wobei die k-te Spalte $\langle H \rangle_k$ von H einem Kanalkoeffizientenvektor der empfangenden drahtlosen Zielvorrichtung entspricht.

8. Computerprogramm, umfassend einen Computerprogrammcode, der bei Ausführung in einem Netzknoten (110a, 110b) den Netzknoten (110a, 110b) veranlasst, ein Verfahren nach einem der Ansprüche 1-7 auszuführen.

9. Netzknoten (110c), der dazu konfiguriert ist, mindestens einen Strahlformungsvektor für eine Funksendung zu oder einen Funkempfang von mindestens einer drahtlosen Zielvorrichtung (120) zu erzeugen, wobei der Netzknoten (110c) ein Verarbeitungsmittel (210) umfasst, das zu Folgendem konfiguriert ist:

- Erhalten einer jeweiligen Kanalzustandsinformation (CSI) und eines CSI-Genauigkeitswerts für eine oder mehrere drahtlose Vorrichtungen (120, 121, 122); und
- Erzeugen des mindestens einen Strahlformungsvektors auf Grundlage der CSI und des entsprechenden CSI-Genauigkeitswerts, wobei eine CSI, die mit einem hohen CSI-Genauigkeitswert verknüpft ist, eine gleiche oder höhere Präferenz bei der Erzeugung erhält, verglichen mit einer CSI, die mit einem niedrigeren CSI-Genauigkeitswert als dem hohen CSI-Genauigkeitswert verknüpft ist, und wobei das Verarbeitungsmittel (210) ferner zu Folgendem konfiguriert ist:
- Empfangen eines Zeitstempels der CSI von der einen oder den mehreren drahtlosen Vorrichtungen (120, 121, 122); und
- Bestimmen des erhaltenen entsprechenden CSI-Genauigkeitswerts auf Grundlage einer verstrichenen Zeitdauer zwischen dem empfangenen Zeitstempel der CSI und einem Zeitpunkt der Erzeugung des mindestens einen Strahlformungsvektors, wobei bei jeder der einen oder mehreren drahtlosen Vorrichtungen (120, 121, 122) mit einem CSI-Genauigkeitswert über einem Schwellenwert gilt, dass sie eine genaue CSI zur Verwendung bei der Strahlformung aufweist,

wobei das Verarbeitungsmittel (210) ferner zu Folgendem konfiguriert ist:

- Erhalten eines jeweiligen Kanalkoeffizientenvektors $h_i$ mit dem Index i= 1,...,N für jede drahtlose Vorrichtung der einen oder mehreren drahtlosen Vorrichtungen (120, 121, 122), die mit CSI-Genauigkeitswerten $t_i$ verknüpft sind und sich von einer ersten drahtlosen Zielvorrichtung, die mit einem Kanalkoeffizientenvektor $h'$ verknüpft ist, unterscheiden; und
- Erzeugen eines Strahlformungsvektors $w$ für eine Funksendung zu oder einen Funkempfang von der ersten drahtlosen Zielvorrichtung als Lösung für ein Problem der eingeschränkten Optimierung, gegeben durch:

maximiere $|w^*h'|$ über $w$
so dass

$$\left| w^* h_i \right| < t_i, \quad i = 1, \dots, N \ ;$$

und

$$\|w\| = 1$$

wobei $a^*$ eine Komplexkonjugierte von Vektor $a$ bezeichnet, $|\ |$ einen absoluten Wert bezeichnet und ‖‖ eine euklidische Vektornorm bezeichnet
und wobei für eine Teilmenge der einen oder mehreren drahtlosen Vorrichtungen (120, 121, 122) mit genauer CSI das Verarbeitungsmittel (210) ferner zu Folgendem konfiguriert ist:

- Erhalten eines jeweiligen Kanalkoeffizientenvektors $h_i$ für jede der einen oder mehreren drahtlosen Vorrichtungen (120, 121, 122), die mit einem CSI-Genauigkeitswert gleich oder über dem Schwellenwert verknüpft sind und sich von der ersten drahtlosen Zielvorrichtung unterscheiden; und

- Erzeugen eines Strahlformungsvektors für eine Funksendung zu oder einen Funkempfang von der ersten drahtlosen Zielvorrichtung als ein Vektor in einem Nullraum einer transponierten Matrix H~ mit Spalten, die durch die Kanalkoeffizientenvektoren $h_i$ gegeben sind, wobei die Erzeugung des Strahl-

$$w = \frac{\langle Z^+ \rangle_1}{\|\langle Z^+ \rangle_1\|}$$

formungsvektors ferner die Erzeugung des Strahlformungsvektors als $w = \frac{\langle Z^+ \rangle_1}{\|\langle Z^+ \rangle_1\|}$ umfasst, wobei $\langle Z^+ \rangle_1$ eine erste Spalte der Pseudoinversen zur Matrix $Z = [h', \tilde{H}^T]^T$ und $h'$ einen Kanalkoeffizientenvektor der ersten drahtlosen Zielvorrichtung bezeichnet.

## Revendications

1. Procédé, exécuté dans un nœud de réseau (110a, 110b) pour générer au moins un vecteur de formation de faisceau pour la transmission radio vers, ou la réception radio depuis, au moins un dispositif sans fil cible (120), le procédé comprenant :

- l'obtention (N1), pour un ou plusieurs dispositifs sans fil (120, 121, 122), d'une information d'état de canal, CSI, respective, et d'une valeur de précision CSI ; et
- la génération (N5) de l'au moins un vecteur de formation de faisceau sur la base de la CSI et de la valeur de précision CSI correspondante, dans lequel une CSI associée à une valeur de précision CSI élevée reçoit une préférence égale ou supérieure dans la génération (N5) par rapport à une CSI associée à une valeur de précision CSI inférieure à la valeur de précision CSI élevée, et dans lequel l'obtention (N1) de la valeur de précision CSI comprend :
- la réception (N112) d'un horodatage de la CSI en provenance des un ou plusieurs dispositifs sans fil (120, 121, 122) ; et
- la détermination (N113) de la valeur de précision CSI correspondante sur la base d'une durée écoulée entre l'horodatage reçu de la CSI et un instant de génération (N5) de l'au moins un vecteur de formation de faisceau,

dans lequel chacun des un ou plusieurs dispositifs sans fil (120, 121, 122) ayant une valeur de précision CSI supérieure à un seuil est considéré comme ayant une CSI précise pour une utilisation dans la formation de faisceau, dans lequel la génération (N5) comprend en outre :

- l'obtention (N511) d'un vecteur de coefficient de canal respectif $h_i$, où l'indice i = 1, ..., N pour chaque dispositif sans fil des un ou plusieurs dispositifs sans fil (120, 121, 122) associé à des valeurs de précision CSI $t_i$, et différent d'un premier dispositif sans fil cible associé à un vecteur de coefficient de canal $h'$ ; et
- la génération (N512) d'un vecteur de formation de faisceau $w$ pour la transmission radio vers, ou la réception radio depuis, le premier dispositif sans fil cible en tant que solution à un problème d'optimisation sous contrainte donné par :
maximisation de $|w^* h'|$ par rapport à $w$
de sorte que

$$\left| w^* h_i \right| < t_i, \quad i = 1, ..., N ;$$

et

$$\left\| w \right\| = 1$$

où $a^*$ désigne un conjugué complexe du vecteur $a$, $||$ désigne une valeur absolue, et $||\ ||$ désigne une norme vectorielle euclidienne ;
et dans lequel, pour un sous-ensemble des un ou plusieurs dispositifs sans fil (120, 121, 122) ayant une CSI précise, la génération (N5) comprend en outre :

- l'obtention (N531) d'un vecteur de coefficient de canal respectif $h_i$ pour chacun des un ou plusieurs dispositifs sans fil (120, 121, 122) qui est associé à une valeur de précision CSI égale ou supérieure au seuil et différent du premier dispositif sans fil cible ; et
- la génération (N532) d'un vecteur de formation de faisceau pour la transmission radio vers, ou la réception radio depuis, le premier dispositif sans fil cible en tant que vecteur dans un espace nul d'une matrice transposée $\tilde{H}$ ayant des colonnes données par lesdits vecteurs de coefficient de canal $h_i$, dans lequel la

génération (N532) comprend en outre la génération (N533) du vecteur de formation de réseau en tant que

$$w = \frac{\langle Z^+ \rangle_1}{\|\langle Z^+ \rangle_1\|},$$ $\langle Z^+ \rangle_1$ désignant une première colonne de pseudo-inverse de matrice $Z = [h', \tilde{H}^T]^T$, et $h'$ désignant un vecteur de coefficient de canal du premier dispositif sans fil cible.

2. Procédé selon la revendication 1, la génération (N5) comprenant en outre la protection de dispositifs sans fil associés à une première plage de valeurs de précision CSI contre une interférence de transmission radio avant la protection de dispositifs sans fil associés à une plage de valeurs de précision CSI inférieure à la première plage de valeurs de précision CSI contre l'interférence de transmission radio.

3. Procédé selon la revendication 1, la génération (N5) comprenant en outre l'amélioration de la qualité de signal reçu d'un dispositif sans fil cible récepteur lorsque le dispositif sans fil cible récepteur est associé à une valeur de précision CSI élevée, et la réduction d'une interférence de transmission radio avec d'autres dispositifs sans fil lorsque le dispositif sans fil cible récepteur est associé à une valeur de précision CSI inférieure à la valeur de précision CSI élevée.

4. Procédé selon l'une quelconque des revendications 1 ou 3, dans lequel les un ou plusieurs dispositifs sans fil (120, 121, 122) constituent un dispositif sans fil cible récepteur, et dans lequel la génération (N5) comprend en outre :

   - la détermination (N55) d'un vecteur de formation de faisceau pour la transmission radio vers, ou la réception radio depuis, le premier dispositif sans fil cible sous forme de somme, pondérée par une valeur de précision CSI t du dispositif sans fil cible récepteur, d'un vecteur de formation de faisceau selon un critère de transmission à rapport maximal, MRT, et d'un vecteur de formation de faisceau selon un critère de forçage nul, ZF, le vecteur de formation de faisceau étant donné par :

$$w = t * w_{MRT} + (1 - t) * w_{ZF},$$

   où t prend des valeurs comprises entre zéro et un, $w_{MRT}$ désigne un vecteur de formation de faisceau dérivé selon un critère MRT, et $w_{ZF}$ désigne un vecteur de formation de faisceau dérivé selon un critère ZF.

5. Procédé selon l'une quelconque des revendications 1 ou 3, dans lequel les un ou plusieurs dispositifs sans fil (120, 121, 122) constituent un dispositif sans fil cible récepteur, et dans lequel la génération (N5) comprend en outre :

   - la détermination (N571) d'un vecteur de formation de faisceau pour la transmission radio vers, ou la réception radio depuis, le premier dispositif sans fil cible en fonction d'un critère de transmission à rapport maximal, MRT, si le dispositif sans fil cible récepteur est associé à une valeur de précision CSI supérieure au seuil ; et
   - la détermination (N572) du vecteur de formation de faisceau en fonction d'un critère de forçage nul, ZF, dans le cas où le dispositif sans fil cible récepteur est associé à une valeur de précision CSI inférieure au seuil.

6. Procédé selon la revendication 4 ou 5, dans lequel la détermination (N55, N571) comprend en outre :

   - la détermination (N591) du vecteur de formation de faisceau en fonction du critère MRT en tant que

$$w_{MRT} = \frac{h_k^*}{\|h_k^*\|},$$ $h_k$ désignant un vecteur de coefficient de canal du dispositif sans fil cible récepteur, $a^*$ désignant un conjugué complexe du vecteur **a**, et $\|\ \|$ désignant la norme vectorielle euclidienne.

7. Procédé selon l'une quelconque des revendications 4 à 6, dans lequel la détermination (N55, N572) comprend en outre :

   - la détermination (N592) du vecteur de formation de faisceau en fonction du critère ZF en tant que

$$w_{ZF} = \frac{\langle |H^T|^+ \rangle_k}{\|\langle |H^T|^+ \rangle_k\|},$$ $\langle A \rangle_k$ désignant la colonne k:th de la matrice A, $[H^T]^+$ désignant une pseudo-inverse à la matrice transposée H ayant des colonnes données par lesdits vecteurs de coefficient de canal $h_i$ des un ou

plusieurs dispositifs sans fil (120, 121, 122), et | | | | désignant la norme vectorielle euclidienne, dans lequel la colonne k:th $<H>_k$ de H correspond à un vecteur de coefficient de canal du dispositif sans fil cible récepteur.

8. Programme informatique comprenant un code de programme informatique qui, lorsqu'il est exécuté dans un nœud de réseau (110a, 110b), amène le nœud de réseau (110a, 110b) à exécuter un procédé selon l'une quelconque des revendications 1 à 7.

9. Nœud de réseau (110c) configuré pour générer au moins un vecteur de formation de faisceau pour la transmission radio vers, ou la réception radio depuis, au moins un dispositif sans fil cible (120), le nœud de réseau (110c) comprenant un moyen de traitement (210) configuré pour :

- obtenir, pour un ou plusieurs dispositifs sans fil (120, 121, 122), une information d'état de canal, CSI, respective, et une valeur de précision CSI ; et
- générer l'au moins un vecteur de formation de faisceau sur la base de la CSI et de la valeur de précision CSI correspondante, dans lequel une CSI associée à une valeur de précision CSI élevée reçoit une préférence égale ou supérieure dans la génération par rapport à une CSI associée à une valeur de précision CSI inférieure à la valeur de précision CSI élevée, et

dans lequel le moyen de traitement (210) est en outre configuré pour :

- recevoir un horodatage de la CSI en provenance des un ou plusieurs dispositifs sans fil (120, 121, 122) ; et
- déterminer la valeur de précision CSI correspondante obtenue sur la base d'une durée écoulée entre l'horodatage reçu de la CSI et un instant de la génération de l'au moins un vecteur de formation de faisceau, dans lequel chacun des un ou plusieurs dispositifs sans fil (120, 121, 122) ayant une valeur de précision CSI supérieure à un seuil est considéré comme ayant une CSI précise pour une utilisation dans la formation de faisceau,

dans lequel le moyen de traitement (210) est en outre configuré pour :

- obtenir un vecteur de coefficient de canal respectif $\mathbf{h}_i$, où l'indice i = 1, ..., N pour chaque dispositif sans fil des un ou plusieurs dispositifs sans fil (120, 121, 122) associé à des valeurs de précision CSI $t_i$, et différent d'un premier dispositif sans fil cible associé à un vecteur de coefficient de canal $\mathbf{h}'$ ; et
- générer un vecteur de formation de faisceau $\mathbf{w}$ pour la transmission radio vers, ou la réception radio depuis, le premier dispositif sans fil cible en tant que solution à un problème d'optimisation sous contrainte donné par : maximisation de $|\mathbf{w}^*\mathbf{h}'|$ par rapport à $\mathbf{w}$
de sorte que

$$\left| \mathbf{w}^* \mathbf{h}_i \right| < t_i, \quad i = 1, ..., N ;$$

et

$$\left\| \mathbf{w} \right\| = 1$$

où $\mathbf{a}^*$ désigne un conjugué complexe du vecteur $\mathbf{a}$, | | désigne une valeur absolue,
et
| | | | désigne une norme vectorielle euclidienne ;
et dans lequel, pour un sous-ensemble des un ou plusieurs dispositifs sans fil (120, 121, 122) ayant une CSI précise, le moyen de traitement (210) est en outre configuré pour :

- obtenir un vecteur de coefficient de canal respectif $\mathbf{h}_i$ pour chacun des un ou plusieurs dispositifs sans fil (120, 121, 122) qui est associé à une valeur de précision CSI égale ou supérieure au seuil et différent du premier dispositif sans fil cible ; et

- générer un vecteur de formation de faisceau pour la transmission radio vers, ou la réception radio depuis, le premier dispositif sans fil cible en tant que vecteur dans un espace nul d'une matrice transposée $\tilde{H}$ ayant des colonnes données par lesdits vecteurs de coefficient de canal $\mathbf{h}_i$, dans lequel la génération du vecteur de formation de faisceau comprend en outre la génération du vecteur de formation de réseau en tant que

$$w = \frac{\langle Z^+ \rangle_1}{\| \langle Z^+ \rangle_1 \|},$$

$\langle Z^+ \rangle_1$ désignant une première colonne de pseudo-inverse de matrice $Z = [h', \tilde{H}^T]^T$, et $h'$ désignant un vecteur de coefficient de canal du premier dispositif sans fil cible.

Fig 1

Fig 2

**N1: obtain CSI and corresponding CSI accuracy value(s)**

N10: receive CSI accuracy values from wireless device(s)

N11: receive CSI accuracy related information from wireless device(s)

N111: determine CSI accuracy value(s) based on accuracy related info

N112: receive time-stamp(s) from wireless device(s)

N113: determine CSI accuracy value based on time-stamp(s)

N114: receive velocity value of a wireless device

N115: determine CSI accuracy value based on velocity

**N5: generate beamforming vector based on obtained CSI and CSI accuracy value(s)**

# Fig 3

**N5: generate beamforming vector based on obtained CSI and CSI accuracy value(s)**

N511: obtain channel vectors $h_i$ for wireless devices

N512: generate beam-forming vector as solution to optimization problem

N531: obtain vectors $h_i$ for devices with CSI accuracy value above threshold

N532: generate w in null-space of obtained channel vectors $h_i$

N533: generate w as $w = \dfrac{(z^\perp)_k}{\|(z^\perp)_k\|}$

N55: determine beam-forming vector according to weighted sum of MRT and ZF criterion-based beam-forming vectors

N571: determine beam-forming according to MRT if CSI accuracy value above threshold

N572: determine beam-forming according to ZF if CSI accuracy value below threshold

N591: generate MRT-criterion beamforming as:

$$w = \frac{h_i^*}{\|h_i^*\|}$$

N592: generate ZF-criterion beamforming as:

$$w = \frac{([H^T]^+)_k}{\|([H^T]^+)_k\|}$$

Fig 4

N6: define common DMRS resource

N7: define one or more orthogonal DMRS resources

N8: classify wireless device into category based on CSI accuracy value

N91: transmit DMRS on the common DMRS resource to wireless devices classified into 1st category

N92: transmit DMRS on wireless-device specific orthogonal DMRS resources to other wireless devices not classified into 1st category

N9: transmit wireless device specific data using DMRS on the defined common DMRS resource

Fig 5

D1: determine CSI accuracy value

D3: transmit CSI accuracy value to network node

D5: receive beam-formed transmission

# Fig 6

Fig 7

EP 3 210 314 B1

Fig 8

110c Network node

210 Processor

220
Communication
Interface

MEM
230

# Fig 9

120b Wireless device

310 Processor

311  312  313

320
Communication
Interface

MEM
330

# Fig 10

**110d**

```
NX1: obtaining module
```

```
NX5: generating module
```

# Fig 11

120c

DX1: determining module

DX3: transmitting module

DX5: receiving module

# Fig 12

**REFERENCES CITED IN THE DESCRIPTION**

**Patent documents cited in the description**

- EP 1499056 A1
- WO 2014040655 A1
- WO 2007032715 A1